# EUROPÄISCHE PATENTSCHRIFT

(11) **EP 1 134 440 B1**
(45) Veröffentlichungstag und Bekanntmachung des Hinweises auf die Patenterteilung: **29.10.2003**
(21) Anmeldenummer: 01105753.6
(22) Anmeldetag: 08.03.2001
(51) Int. Cl.: F16B 39/06

(54) **Verbindungsanordnung**
Connection assembly
Ensemble de connexion

(30) Priorität: 14.03.2000 DE 10012384
(43) Veröffentlichungstag der Anmeldung: 19.09.2001
(73) Patentinhaber: ZF FRIEDRICHSHAFEN Aktiengesellschaft, 88038 Friedrichshafen (DE)
(72) Erfinder: Friedl, Reinhard, 94146 Hinterschmiding (DE)

(56) Entgegenhaltungen:
- US-A- 2 457 945
- US-A- 3 541 624
- US-A- 5 069 587
- US-A- 5 846 042

## Beschreibung

Die vorliegende Erfindung betrifft eine Verbindungsanordnung für zwei miteinander in Wirkeingriff stehende Bauteile, insbesondere für die Feststellung eines Radlagers auf einer Gewindewelle eines land- oder bauwirtschaftlichen Fahrzeugs, mit einem Sicherungselement, das ein Lösen der Halteanordnung unter hoher Belastung verhindert.

Es sind zahlreiche Verbindungsanordnungen für zwei, z. B. unter Vorspannung miteinander in Wirkeingriff stehende Bauteile bekannt, wobei oftmals das eine Bauteil eine Gewindewelle ist und das andere Bauteil eine drehbar oder drehfest mit ihr verbundene Trag- oder Kraftübertragungseinrichtung ist, die z. B. mittels einer Sperrzahn-Zentralschraube miteinander verbunden sind. Um ein Lösen dieser Schraube zu verhindern, ist ein Sicherungselement vorzusehen, das jedoch oftmals nicht den schweren Belastungen am Arbeitseinsatz, z. B. bei landwirtschaftlichen oder bauwirtschaftlichen Arbeitsgeräten über längere Zeit standhält.

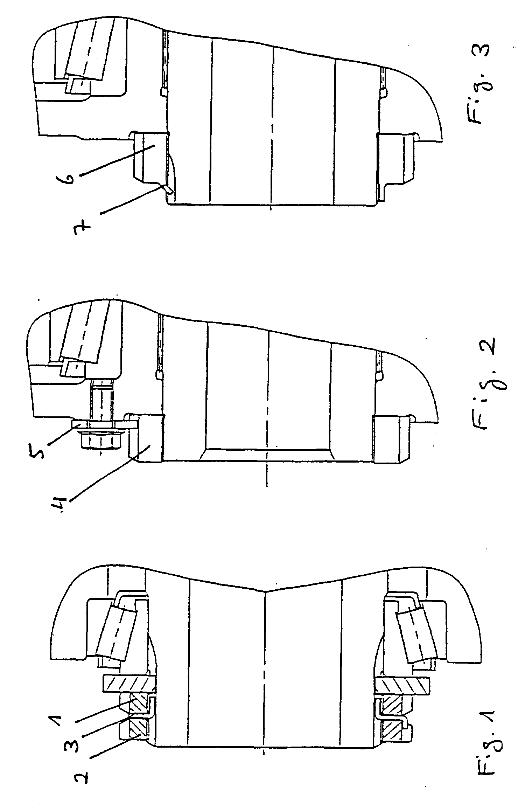

Eine bekannte Verbindungsanordnung, wie sie in Fig. 1 im Schnitt gezeigt ist, weist eine erste Mutter auf, mit der die beiden Bauteile unter vorgegebener Vorspannung miteinander in Wirkeingriff gebracht werden, sowie eine Kontermutter mit einem dazwischen liegenden Sicherungsblech. Für den Einsatz in schweren Arbeitsmaschinen sind jedoch sehr massive Muttern zu verwenden, um eine dauerhafte Verbindung herzustellen, wodurch ein nicht unerheblicher Bauraum erforderlich ist.

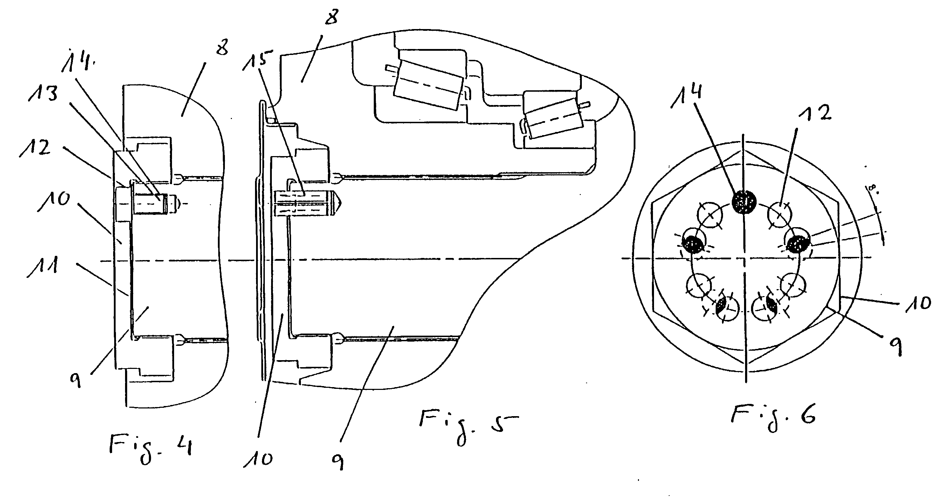

Eine zweite bekannte Verbindungseinrichtung, wie sie in Fig. 2 schematisch dargestellt ist, verwendet eine Nutmutter mit einem verschraubten Sicherungsblech, zu dessen Befestigung im Aussenteil der Gewindewelle Bohrungen erforderlich sind, die im spannungskritischen Bereich bei schwer belasteten Arbeitsmaschinen liegen.

Eine weitere bekannte Verbindungsanordnung, wie sie in Fig. 3 schematisch dargestellt ist, verwendet eine Mutter mit Stemmbund sowie eine Sicherungsnut, in die dieser Stemmbund eingreift. Im Reparaturfall, d. h. nach dem Lösen der Verstemmung, muß jedoch die Mutter getauscht werden, wobei außerdem die Gefahr besteht, dass beim Lösen der Verstemmung und auch beim Losdrehen der deformierten Mutter das Gewinde der Gewindewelle beschädigt werden kann.

Aus der DE-PS 14 00 936 ist eine Sicherung für eine auf ein Wellenteil aufschraubbare Nutmutter zur Befestigung von einem oder mehreren mit bestimmter Vorspannung auf dem Wellenteil einzustellenden Getriebeteilen, z. B. Kegelrollenlagern, bekannt, mit einem auf der druckfreien Seite der Nutmutter angeordneten, mit äußeren und inneren Sicherungslappen versehenen Sicherungselement, einem mit einem Zahnprofil mit zylindrischem Nutenauslauf versehenem weiteren Wellenteil, auf dem ein weiteres an dem Sicherungselement anliegendes Getriebeteil drehfest gelagert ist, wobei das mit mehreren inneren Sicherungslappen in das Zahnprofil der Welle eingreifende Sicherungselement als ein den zylindrischen Auslauf der Nuten des Zahnprofils überdeckendes Abstandsstück ausgebildet ist.

Ein solches mittels Innenlappen auf dem Zahnprofil drehfest gelagertes Sicherungselement mit einer zur Nutenzahl der Nutmutter passend gewählten Zähnezahl muß in einer bestimmten durch Probieren auffindbaren Winkellage gegenüber der Nutmutter auf das Zahnprofil aufgesetzt werden und zwar derart, dass sämtliche bereits vorgebogenen Aussenlappen in die Mutternuten eingreifen. Auch diese bekannte Sicherung für eine auf einen Wellenteil aufschraubbare Nutmutter eignet sich nicht für schwerbelastete Arbeitsmaschinen, insbesondere landwirtschaftliche und bauwirtschaftliche Arbeitsmaschinen.

Aufgabe der vorliegenden Erfindung ist es, eine Verbindungsanordnung für zwei miteinander in Wirkeingriff stehende und schwer belastbare Bauteile zu schaffen, die eine sichere Verbindung über einen langen Zeitraum auch unter erschwerten Einsatzbedingungen gewährleistet, die mit einem vorgegebenen Drehmoment anziehbar ist, wobei sich der Wert des Anziehdrehmomentes gegenüber den herkömmlichen Verbindungsanordnungen nur wenig ändert und die im Reparaturfall leicht und ohne Schäden an den miteinander verbundenen Bauteile gelöst werden kann.

Ausgehend von einer Verbindungsanordnung der eingangs genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Die Erfindung geht also aus von einer Verbindungsanordnung für zwei miteinander in Wirkeingriff stehende Bauteile, insbesondere für die Feststellung eines Radlagers auf einer Gewindewelle eines land- oder bauwirtschaftlichen Fahrzeugs, mit einem Sicherungselement, das ein Lösen der Halteanordnung unter hoher Belastung verhindert.

Erfindungsgemäß ist vorgesehen, dass die Verbindungsanordnung die Form einer becherförmigen Zentralmutter mit einem ebenen Boden aufweist, deren Innengewinde an das Außengewinde der Gewindewelle angepaßt ist, dass der Boden der Zentralmutter mit einer Anzahl von koaxial zur Symmetrieachse angeordneten Öffnungen versehen ist, dass die Gewindewelle auf dem dem Boden zugewandten Ende mit einer Anzahl von Bohrungen versehen ist, die koaxial zur Längsachse der Welle auf einem Kreis mit dem gleichen Durchmesser wie derjenige der Öffnungen im Boden der Zentralmutter angeordnet sind und dass wenigstens ein Sicherungselement eine der Öffnungen im Boden durchsetzt und in eine der Bohrungen eingreift.

Vorzugsweise unterscheidet sich die Anzahl der Öffnungen im Boden der Zentralmutter von der Anzahl der Bohrungen in der Gewindewelle.

Das Sicherungselement kann entweder ein Spannstift sein, der zur Demontage mit einem Innengewinde versehen ist oder aber eine Zylinderkopfschraube sein, wobei in diesem Fall die Bohrungen in der Gewindewelle mit einem Innengewinde versehen sind.

Die Lagereinheit wird hierbei auf Block verspannt, wonach die Zentralmutter auf einen vorgegebenen Drehmomentwert angezogen wird. Beim Einbringen des Sicherungselementes ändert sich der Wert des Anziehdrehmomentes der Mutter nur wenig gegenüber den herkömmlichen Lösungen. Das Sicherungselement läßt sich zur Demontage des Radlagers im Reparaturfall leicht und ohne Schäden von der Verbindungsanordnung lösen. Die erfindungsgemäße Verbindungsanordnung ist kompakt, sodass die Länge des Radkopfes nicht vergrößert wird. Im Reparaturfall läßt sich die Verbindungsanordnung erneut zur Feststellung des Radlagers verwenden.

Im folgenden wird die Erfindung anhand der Zeichnung näher erläutert, in der vorteilhafte Ausführungsbeispiele dargestellt sind.

Es zeigen:
- Fig. 1 bis 3: drei herkömmliche Verbindungsanordnungen;
- Fig. 4: eine erfindungsgemäße Verbindungsanordnung mit einer Zylinderkopfschraube;
- Fig. 5: eine erfindungsgemäße Verbindungsanordnung mit einem Spannstift und
- Fig. 6: eine Draufsicht auf Mutter und Gewindewelle zur Darstellung der Lage der Öffnungen bzw. Bohrungen.

Wie bereits eingangs erwähnt, zeigt Fig. 1 eine herkömmliche Verbindungsanordnung für zwei miteinander im Wirkeingriff stehende Bauteile, insbesondere ein Radlager auf einer Gewindewelle, mit einer Mutter 1, einer Kontermutter 2 und einem dazwischen liegenden Sicherungsblech 3. Eine derartige Verbindungsanordnung läßt sich in schweren Arbeitsmaschinen nur dann einsetzen, wenn sehr massive Muttern und Kontermuttern verwendet werden, um ein Lockern der Verbindung zu verhindern, wodurch ein entsprechend großer Bauraum erforderlich ist.

Fig. 2 zeigt eine herkömmliche Nutmutter 4 mit einem verschraubten Sicherungsblech 5. Hierbei sind Gewindebohrungen zur Aufnahme der das Sicherungsblech haltenden Verschraubung in spannungskritischem Bereich der Gewindewelle erforderlich.

Fig. 3 zeigt eine bekannte Mutter 6 mit einer Verstemmung 7, wobei im Reparaturfall nach dem Lösen der Verstemmung die Mutter 6 ausgetauscht werden muß. Außerdem besteht, wie bereits erwähnt, die Gefahr, dass beim Lösen der Verstemmung und auch beim Losdrehen der deformierten Mutter das Gewinde der Gewindewelle beschädigt wird.

Fig. 4 zeigt ein erstes Ausführungsbeispiel einer erfindungsgemäßen Verbindungsanordnung für zwei miteinander in Wirkeingriff stehenden Bauteile, insbesondere für die Feststellung eines Radlagers 8 auf einer Gewindewelle 9, wie es bei land- oder bauwirtschaftlichen Fahrzeugen der Fall ist. Die Verbindungsanordnung besteht hierbei einerseits aus einer becherförmigen Zentralmutter 10 mit ebenem Boden 11, deren Innengewinde an das Außengewinde der Gewindewelle 9 angepaßt ist und auf dieses aufgeschraubt ist. Der Boden 11 der Zentralmutter 10 ist mit einer Anzahl von koaxial zur Symmetrieebene angeordneten Öffnungen versehen, von denen eine mit 12 bezeichnet ist, während die Gewindewelle 9 an dem dem Boden 11 zugewandten Ende mit einer Anzahl von Bohrungen 14 versehen ist, die koaxial zur Längsachse der Welle 9 auf einem Kreis angeordnet sind, der den gleichen Durchmesser aufweist, wie der Kreis, auf dem die Öffnungen 12 im Boden 11 der Zentralmutter 10 angeordnet sind.

Wenigstens ein Sicherungselement durchsetzt eine der Öffnungen 12 im Boden der Zentralmutter und greift in eine der Bohrungen 14 in der Gewindewelle ein.

Bei dem in Fig. 4 dargestellten Ausführungsbeispiel ist das die Öffnung und die Bohrung durchsetzende Sicherungselement 13 eine Zylinderkopfschraube, wobei zu deren Aufnahme und sicheren Halterung die Bohrung 14 in der Gewindewelle 9 mit einem Innengewinde versehen ist.

Bei dem in Fig. 5 dargestellten Ausführungsbeispiel, bei dem gleiche Teile mit gleichen Bezugszeichen versehen sind, ist ebenfalls die Zentralmutter 10 in ihrem Boden mit einer Anzahl kreisförmig angeordneter Öffnungen versehen, während die Gewindewelle 9 eine Anzahl kreisförmiger Bohrungen aufweist, wobei die beiden Lochkreisdurchmesser gleich sind. Anstelle einer Zylinderkopfschraube 13 ist hierbei ein Spannstift 15 vorgesehen, der eine der Öffnungen durchsetzt und in eine der Bohrungen eingreift. Für die Demontage ist dieser Spannstift 15 mit einem Innengewinde versehen.

Fig. 6 zeigt eine Draufsicht auf Zentralmutter und stirnseitiges Ende der Gewindewelle 9, wobei aus dieser Draufsicht ersichtlich ist, dass die Teilung der beiden Lochkreise unterschiedlich ausgeführt ist. Durch eine bestimmte Wahl der beiden Lochkreisteilungen kann der Verdrehwinkel zur nächsten Bohrungsüberdeckung festgelegt werden und dieser Verdrehwinkel je nach Aufwand, d. h. nach Anzahl der Bohrungen sehr klein gehalten werden.

Beim dargestellten Ausführungsbeispiel gemäß Fig. 6 wurde bei der Zentralmutter die Teilung 9 (= 40°) und in der Stirnseite der Gewindewelle die Teilung 5 (= 72°) gewählt, woraus sich ein Weiterdrehwinkel von 8° ergibt.

### Bezugszeichen

- 1: Mutter
- 2: Kontermutter
- 3: Sicherungsblech
- 4: Nutmutter
- 5: Sicherungsblech
- 6: Mutter
- 7: Stemmbund
- 8: Radlager
- 9: Gewindewelle
- 10: Zentralmutter
- 11: Boden
- 12: Öffnung
- 13: Zylinderkopfschraube
- 14: Bohrung
- 15: Spannstift

## Patentansprüche

1. Verbindungsanordnung für zwei miteinander in Wirkeingriff stehende Bauteile, insbesondere für die Feststellung eines Radlagers (8) auf einer Gewindewelle (9) eines landoder bauwirtschaftlichen Fahrzeugs, mit einem Sicherungselement (13,15), das ein Lösen der Halteanordnung unter hoher Belastung verhindert, **dadurch gekennzeichnet, dass** die Verbindungsanordnung die Form einer becherförmigen Zentralmutter (10) mit einem ebenen Boden (11) aufweist, deren Innengewinde an das Außengewinde der Gewindewelle (9) angepaßt ist, dass der Boden der Zentralmutter mit einer Anzahl von koaxial zur Symmetrieachse angeordneten Öffnungen (12) versehen ist, dass die Gewindewelle auf dem dem Boden zugewandten Ende mit einer Anzahl von Bohrungen (14) versehen ist, die koaxial zur Längsachse der Welle auf einem Kreis mit dem gleichen Durchmesser wie derjenige der Öffnungen im Boden der Zentralmutter angeordnet sind und dass wenigstens ein Sicherungselement (13, 15) eine der Öffnungen (12) im Boden (11) durchsetzt und in eine der Bohrungen (14) eingreift.

2. Verbindungsanordnung nach Anspruch 1, **dadurch gekennzeichnet, dass** sich die Anzahl der Öffnungen (12) im Boden (11) der Zentralmutter (10) von der Anzahl der Bohrungen (14) in der Gewindewelle (9) unterscheidet.

3. Verbindungsanordnung nach einem der vorhergehenden Ansprüche, **dadurch gekennzeichnet, dass** das Sicherungselement ein Spannstift (15) ist, der zur Demontage mit einem Innengewinde versehen ist.

4. Verbindungsanordnung nach einem der vorhergehenden Ansprüche, **dadurch gekennzeichnet, dass** das Sicherungselement eine Zylinderkopfschraube (13) ist und dass die Bohrungen (14) in der Gewindewelle (9) mit einem Innengewinde versehen sind.

## Claims

1. Connecting arrangement for two components that are in operative engagement with one another, in particular for securing a wheel bearing (8) in position on a threaded shaft (9) belonging to an agricultural or building-industry vehicle, which arrangement has a locking element (13, 15) that prevents the retaining arrangement from coming undone under high loading, **characterised in that** the connecting arrangement has the shape of a cup-shaped central nut (10) which has a flat base (11) and whose internal thread is adapted to the external thread of the threaded shaft (9), that the base of the central nut is provided with a number of apertures (12) disposed coaxially with the axis of symmetry, that the threaded shaft is provided, on the end that faces towards the base, with a number of bores (14) which are disposed, coaxially with the longitudinal axis of the shaft, on a circle having the same diameter as that of the apertures in the base of the central nut, and that at least one locking element (13, 15) passes through one of the apertures (12) in said base (11) and engages in one of said bores (14).

2. Connecting arrangement according to claim 1, **characterised in that** the number of apertures (12) in the base (11) of the central nut (10) differs from the number of bores (14) in the threaded shaft (9).

3. Connecting arrangement according to one of the preceding claims, **characterised in that** the locking element is a dowel pin (15) which is provided with an internal thread for removal purposes.

4. Connecting arrangement according to one of the preceding claims, **characterised in that** the locking element is a cheese-head screw (13), and that the bores (14) in the threaded shaft (9) are provided with an internal thread.

## Revendications

1. Dispositif d'assemblage pour deux éléments qui sont en prise fonctionnelle entre eux, en particulier pour l'immobilisation d'un palier de roue (8) sur un arbre fileté (9) d'un véhicule agricole ou de chantier, comprenant un élément d'arrêt (13, 15) qui empêche le dispositif de retenue de se desserrer sous une forte sollicitation, **caractérisé en ce que** le dispositif d'assemblage présente la forme d'un écrou central (10) en forme de godet et pourvu d'un fond plat (11), et dont le filetage intérieur est adapté au filetage extérieur de l'arbre fileté (9), **en ce que** le fond de l'écrou central est pourvu d'un certain nombre d'ouvertures (12) disposées coaxialement à l'axe de symétrie, **en ce que** l'arbre fileté est pourvu, sur l'extrémité dirigée vers le fond, d'un certain nombre de perçages (14) qui sont disposés, coaxialement à l'axe longitudinal de l'arbre, sur un cercle ayant le même diamètre que le cercle des ouvertures du fond de l'écrou central et **en ce qu'**au moins un élément d'arrêt (13, 15) traverse l'une des ouvertures (12) du fond (11) et est engagé dans l'un des perçages (14).

2. Dispositif d'assemblage selon la revendication 1, **caractérisé en ce que** le nombre des ouvertures (12) du fond (11) de l'écrou central (10) est différent du nombre des perçages (14) de l'arbre fileté (9).

3. Dispositif d'assemblage selon l'une des revendications précédentes, **caractérisé en ce que** l'élément d'arrêt est une goupille élastique (15) qui est pourvue d'un filetage intérieur pour le démontage.

4. Dispositif d'assemblage selon l'une des revendications précédentes, **caractérisé en ce que** l'élément d'arrêt est une vis à tête cylindrique (13) et **en ce que** les perçages (14) de l'arbre fileté (9) sont pourvus d'un filetage intérieur.
